Europäisches Patentamt

(19) European Patent Office

Office européen des brevets

(11) Veröffentlichungsnummer: **0 101 020**
**B1**

(12) **EUROPÄISCHE PATENTSCHRIFT**

(45) Veröffentlichungstag der Patentschrift:
15.07.87

(51) Int. Cl.⁴: **G 11 B 5/70**

(21) Anmeldenummer: **83107686.4**

(22) Anmeldetag: **04.08.83**

(54) **Flexible Schichtmagnetogrammträger mit Rückschicht.**

(30) Priorität: **14.08.82 DE 3230394**

(43) Veröffentlichungstag der Anmeldung:
**22.02.84 Patentblatt 84/8**

(45) Bekanntmachung des Hinweises auf die Patenterteilung:
**15.07.87 Patentblatt 87/29**

(84) Benannte Vertragsstaaten:
**DE FR GB NL**

(56) Entgegenhaltungen:
**DE - A - 2 500 546**
**DE - A - 3 132 604**
**US - A - 4 020 227**

(73) Patentinhaber: **BASF Aktiengesellschaft,
Carl-Bosch-Strasse 38, D-6700 Ludwigshafen (DE)**

(72) Erfinder: **Roller, Hermann, Schwedlerstrasse 118,
D-6700 Ludwigshafen (DE)**
Erfinder: **Balz, Werner, Dr., Kropsburgstrasse 44,
D-6703 Limburgerhof (DE)**
Erfinder: **Baur, Reinhold, Strassburger Strasse 15a,
D-7600 Offenburg (DE)**
Erfinder: **Sommermann, Friedrich, Dr.,
Grimmelshausenstrasse 9, D-7640 Kehl (DE)**
Erfinder: **Gutermann, Winfried, Birkentalstrasse 10,
D-6702 Bad Duerkheim (DE)**

# Beschreibung

Die Erfindung betrifft flexible Schichtmagnetogrammträger mit einer Rückseitenbeschichtung von ausgezeichneter Haft-, Verschleiss- und Klimafestigkeit, bestehend aus einem speziellen Bindemittelgemisch und darin feinverteilten nichtmagnetisierbaren leitfähigen und nichtleitfähigen Feststoffen.

Es ist bekannt, flexible Schichtmagnetogrammträger mit nichtmagnetisierbaren nichtleitfähigen und/oder leitfähigen Stoffen enthaltenden Rückbeschichtungen zu versehen.

In der US-A 3 293 066 ist beschrieben, dass elektrostatische Aufladungen von Magnetbändern, die sich bei zur digitalen Aufzeichnung verwendeten Geräten bei Bandgeschwindigkeiten über 5 m/sec bilden können, durch Aufbringen leitfähiger Rückbeschichtungen beseitigt und dadurch Bandrückseiten verschleissfester gemacht werden können. Es ist ausserdem aus der GB-A 1 197 661 und der US-A 4 135 031 bekannt, durch Aufbringen von Rückschichten mit einer vorgegebenen Oberflächenrauhigkeit die Wickeleigenschaften der Bänder zu verbessern. Auch für Magnetkarten sind solche Rückbeschichtungen bekannt. Aus der DE-A 2 500 546 ist schliesslich bekannt, dass Rückschichten auch für die Benutzung von Videobändern von Vorteil sind.

Es hat sich jedoch gezeigt, dass die vorbekannten Rückschichten oder die Verfahren zu ihrer Herstellung nicht voll befriedigen können. So verleiht zwar das in der US-A 3 293 066 beanspruchte Bindemittel der Rückschicht eine gute Haftfestigkeit, doch neigt es unter ungeeigneten klimatischen Bedingungen, wie hoher Luftfeuchtigkeit und Temperatur, zum Verkleben mit der Magnetschicht und lässt auch im Hinblick auf die Verschleissfestigkeit noch Wünsche offen. Durch das in der DE-A 2 500 546 angewandte Verfahren, für die Rückschicht einen haftvermittelnden Zwischenguss aufzutragen, weil die pigmentierte Bindemittelkombination aus einem Polyesterurethan und einem Polyphenoxyharz nur ungenügend auf einer Polyethylenterephthalatfolie haftet, werden zwar die Bänder haftfest und klimastabil, andererseits besteht durch dieses Verfahren die Notwendigkeit eines weiteren Arbeitsganges, wodurch sich das Produkt verteuert und die Produktionskapazität begrenzt wird.

Aufgabe der vorliegenden Erfindung war es deshalb, flexible Schichtmagnetogrammträger mit einer Rückschicht bereitzustellen, die die vorgenannten Nachteile nicht aufweisen und sich dadurch auszeichnen, dass die Rückschicht eine ausgezeichnete Haft-, Verschleiss- und Klimafestigkeit besitzt und dass diese Eigenschaften ohne besondere Massnahmen erreichbar sind.

Es wurde nun gefunden, dass flexible Schichtmagnetogrammträger bestehend aus einer Polyethylenterephthalatfolie als Trägermaterial, einer auf der einen Seite des Trägermaterials aufgebrachten Magnetschicht aus in einem organischen Bindemittel dispergiertem anisotropem magnetischem Material und einer auf der zur Magnetschicht gegenüberliegenden Seite des Trägermaterials befindlichen leitfähigen Rückschicht, bestehend aus in einem Bindemittel feinverteilten nichtmagnetisierbaren leitfähigen und nichtleitfähigen Feststoffen, der gestellten Aufgabe genügen, wenn das Bindemittel für die Rückschicht aus einem Gemisch aus

(a) 20 bis 45 Gew.teile eines linearen gesättigten Polyesterharzes,

(b) 10 bis 45 Gew.teile eines Polyurethanharzes,

(c) 15 bis 45 Gew.teile eines Polyphenoxyharzes und

(d) 5 bis 30 Gew.teile eines linearen Polyesterurethanharzes

besteht.

In einer bevorzugten Ausführungsform ist das Bindemittelgemisch durch ein Isocyanatharz vernetzt. Dafür kann eine Vielzahl organischer Di-, Tri- oder Polyisocyanate verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylolpropan und Diethylenglykol.

Die einzelnen Komponenten (a) bis (d) des Bindemittelgemisches sind bekannt. Es lassen sich dafür eine Reihe verschiedener handelsüblicher Produkte heranziehen. Besonders vorteilhaft sind linear gesättigte Polyesterharze aus Terephthal- und Isophthalsäure und Ethylenglykol, insbesondere solche, in denen das Verhältnis der Terephthal- zur Isophthalsäure 1:2 beträgt. An Polyurethanharzen wird ein Umsetzungsprodukt von Trimethylolpropan und Hexandiol-1,6, insbesondere im Verhältnis 44:56, mit Toluylendiisocyanat bevorzugt, vor allem dann, wenn ein aus diesen Komponenten aufgebautes Harz mehr als 6 Gew.% OH-Gruppen aufweist. Ein geeignetes Polyphenoxyharz ist aus 2,2-Bis-(4-hydroxyphenyl)-propan und Epichlorhydrin aufgebaut, während Polyesterurethanharze vor allem geeignet sind, wenn sie zwischen 0,1 bis 0,3 Gew.% aktiven Wasserstoff aufweisen und aus Adipinsäure, Butandiol-1,4 und p,p'-Diisocyanatodiphenylmethan hergestellt sind.

Die Herstellung der Magnetschicht der erfindungsgemässen flexiblen Schichtmagnetogrammträger erfolgt in an sich bekannter Weise. Für die Rückschicht werden die nichtmagnetisierbaren leitfähigen und nichtleitfähigen Feststoffe gegebenenfalls zusammen mit üblichen Gleitmitteln sowie mit Dispergierhilfsmitteln in einer Lösung des Bindemittelgemisches aus den Komponenten (a) bis (d) in hierfür bekannten Dispergiermaschinen zu einer homogenen Beschichtungsmasse verarbeitet, welche gegebenenfalls dann unmittelbar vor dem Schichtauftrag auf das Trägermaterial mit einem Isocyanatharz versetzt wird. Durch anschliessendes Verdampfen des Lösungsmittels wird die Rückschicht gegebenenfalls unter Vernetzung des Bindemittelgemisches verfestigt.

In einer vorteilhaften Zusammensetzung besteht die 0,2 bis 5,0 µm dicke Rückschicht aus 20 bis 35, vorzugsweise 20 bis 30 Gew.% eines leitfähigen Russes, 5 bis 15, vorzugsweise 8 bis 12 Gew.% einer pyrogenen oder gefällten Kieselsäure, 2 bis 8, vorzugsweise 3 bis 6 Gew.% eines kubischen Zinkferrits, 0,5 bis 5, vorzugsweise 1 bis 3 Gew.% einer langkettigen Carbonsäure mit 10 bis 22 Kohlenstoffatomen und 30 bis 50, vorzugsweise 35 bis 45 Gew.% des Bindemittelgemisches aus den Komponenten (a) bis (d) sowie gegebenenfalls 15 bis 30, vorzugsweise 20 bis 25 Gew.% des Polyisocyanatharzes.

Das Bindemittel:Pigmentverhältnis der Rückschicht kann von 1:1 bis 4:1 vorzugsweise 1,5:1 bis 2,5:1 variieren. Der in der Schicht verwendete leitfähige Russ ist beispielsweise ein Ölofenruss mit einer spezifischen Oberfläche von etwa 200 m²/g und einer Ölzahl von 185 ml/100 g, der Kohlenstoffgehalt liegt bei 98 Gew.%. In gleicher Weise können auch Russe mit grösserer, bis 1000 m²/g, oder kleinerer Oberfläche, bis 100 m²/g, sowie Abmischungen davon eingesetzt werden. Zur Einstellung der Rückgussrauhigkeit und zur Verstärkung der Rückschicht werden als Füllstoffe Zinkoxid, Titandioxid, α-$Fe_2O_3$, Kalziumkarbonat, Bariumsulfat, Korund, Chromtrioxid, Silikate u.a. eingesetzt. Für die erfindungsgemässen Schichtmagnetogrammträger hat es sich als vorteilhaft erwiesen, je nach Anwendung, z.B. im Audio- bzw. Videobereich, entweder eine organisch ausgerüstete Kieselsäure mit einer mittleren Agglomeratenteilchengrösse von 4 µm oder einer gefällten Kieselsäure mit einer mittleren Sekundarteilchengrösse von 3 µm zusammen mit einem kubischen Zinkferrit einzusetzen.

Zur Dispersionsherstellung werden zweckmässigerweise Dispergierhilfsmittel, wie Fettsäuren der allgemeinen Formel $R^1$–COOH, worin $R^1$ lineare oder verzweigte Alkyl- bzw. Alkylengruppen mit 10–22 Kohlenstoffatomen bedeutet, Salze der Metalle aus der ersten bis dritten Hauptgruppe des Periodensystems der Elemente mit den genannten Carbonsäuren, oder Lecithin verwendet. Dabei hat sich ein Zusatz von 2 bis 3 Gew.%, bezogen auf das Pigment, bewährt.

Geeignete Gleitmittel zur Einstellung der Friktionseigenschaften sind die üblichen Produkte, wie Fettsäureester aus Mono- und Dicarbonsäuren, Fettsäureamide oder Silikonöle. Ein Zusatz von etwa 1 Gew.%, bezogen auf das Bindemittel, ist zweckmässig.

Als organische Lösungsmittel werden Ketone, Dimethylformamid, Tetrahydrofuran und/oder Dioxan eingesetzt.

Die Dispersionherstellung erfolgt in Kugelmühlen, vertikalen oder horizontalen Rührwerkskugelmühlen auf üblichem Weg. Der Rückguss kann entweder mit Giesserlineal, Rasterwalzen oder auch nach dem Reverse roll coating-Verfahren auf die Rückseite einer Polyethylenterephthalatfolie aufgebracht werden. Zur Verdampfung der Lösungsmittel und Trocknung bzw. Härtung der Rückschicht wird diese durch einen Wärmekanal geführt.

Dabei ist es möglich sowohl Magnet- und Rückgussdispersionen in einem Arbeitsgang als auch hintereinander aufzutragen, d.h. zuerst die Magnet- und dann die Rückschicht oder umgekehrt.

Die erfindungsgemässen flexiblen Schichtmagnetogrammträger mit Rückschicht zeichnen sich gegenüber denen nach dem Stand der Technik vor allem darin aus, dass sich in allen für die Anwendung wichtigen Eigenschaften, wie Abriebbeständigkeit, Haftfestigkeit und auch Klimafestigkeit, gleichzeitig hervorragende Werte ergeben. Von Vorteil ist weiter, dass die Herstellung der Rückschicht der Schichtmagnetogrammträger in einem Arbeitsgang zusammen mit dem Auftrag der Magnetschicht auf das Trägermaterial möglich ist.

Das nachfolgende Beispiel stellt eine Ausführungsform der erfindungsgemässen Fertigung der Rückschicht dar. Die und in den weiteren Beispielen genannten Teile und Prozente beziehen sich auf das Gewicht.

Beispiel 1

In den 500 ml fassenden Behälter einer Laborrührwerkskugelmühle werden 1800 Teile Stahlkugeln mit einem Durchmesser von 2–4 mm, 12 Teile eines leitfähigen Russes mit der spezifischen Oberfläche von 200 m²/g, 6 Teile einer organisch ausgerüsteten Kieselsäure mit einer mittleren Agglomeratengrösse von 4 µm, 2 Teile eines kubischen Zinkferrits, 0,5 Teile Stearinsäure, 100 Teile Tetrahydrofuran/Dioxan = 1:1, 28,1 Teile einer 20%igen Lösung eines Polyurethanharzes aus Trimethylpropan/Hexandiol 1,6 = 44:56 und Toluylen 2,4 (2,6) diisocyanat mit 6 Gew.% Hydroxylgruppen in Tetrahydrofuran/Dioxan = 1:1 und 42,1 Teile einer 20%igen Lösung eines Polyphenoxyharzes aus Bisphenol A und Epichlorhydrin mit 6 Gew.% Hydroxylgruppen, in Tetrahydrofuran/Dioxan = 1:1 eingewogen. Dann wurde der Ansatz 2 Stunden lang gemahlen und anschliessend noch 64 Teile einer 13%igen Lösung eines gesättigten Polyesterharzes, hergestellt aus Terephthal-Isophthalsäure (1:2) und Ethylenglykol, in gleichen Teilen Tetrahydrofuran-Dioxan, 43,2 Teile einer 13%igen Lösung eines linearen 0,2 Gew.% aktiven Wasserstoff enthaltenden Polyesterurethanharzes, hergestellt aus Adipinsäure, Butandiol-1,4 und 4,4'-Diisocyanatodiphenylmethan, in gleichen Teilen Tetrahydrofuran-Dioxan, 0,5 Teile Butylstearat und 25,6 Teile einer 50%igen Lösung eines Isocyanatharzes aus 1 Mol Trimethylolpropan und 3 Molen Toluylendiisocyanat in Ethylacetat, zugegeben. Nach weiterem 15minütigem Rühren war die Homogenisierung beendet und die Rückschichtdispersion wurde durch ein Papierfilter filtriert.

Zur Messung der Abrieb-, Haft- und Klimafestigkeit wurde die Dispersion geteilt und auf verschieden dicke Polyethylenterephthalatfolien aufgetragen.

Bei Versuch A erfolgte der Rückschichtauftrag mittels eines Giesserlineals auf eine 75 μm Polyethylenterephthalatfolie in einer Stärke von 5 μm. Die gegenüberliegende Seite war unbeschichtet. Eine 5 μm dicke Schicht war zur Bestimmung der Abriebfestigkeit, die mit dem Taber Abraser-Gerät, Modell 503, der Firma Taber Instruments, North Tonawanda, N.Y., U.S.A., ermittelt wurde, notwendig. Es galten folgende Messbedingungen: Auflagegewicht 250 g, Calibrase Schleifsteine CS 10, der Abrieb in mg wurde nach 1000 Umdrehungen bestimmt. Die Messproben wurden 3 Tage vor dem Test im Trockenschrank bei 60°C getempert. Das Ergebnis ist in der Tabelle angegeben.

Bei Versuch B wurde die Rückschicht mit einer Rasterwalze 2 μm dick auf eine 35 μm gleichfalls einseitig beschichtete Polyethylenterephthalatfolie aufgebracht. Nach dem Trocknen und 3tägigem Tempern bei 60°C wurde die Folie für die Messung der Haftfestigkeit in 6,3 mm (1/4″) breite Bänder aufgeschnitten.

Die Haftfestigkeit wurde wie folgte bestimmt: Ein auf die Rückschicht geklebtes Klebeband wurde mit definiertem Trennradius bei konstanter Abzugsgeschwindigkeit von 0,5 m/sec. abgezogen. Eine Messdose registrierte die hierzu notwendige Kraft, die in cN angegeben wird. Prüfklima: 23°C und 50% RF.

Bei Versuch C wurden Rückschicht- und Videobanddispersion in einem Arbeitsgang auf eine 19 μm dicke Polyethylenterephthalatfolie aufgetragen, zuerst die Rückschicht mit einer Gravurwalze in 0,5 μm Dicke und dann die Videomagnetschicht auf der gegenüberliegenden Folienseite mit einem Giesserlinieal in 5 μm Dicke. Nach dem Kalandrieren der Videomagnetschicht und 3tägiger Temperung bei 60°C wurde der Versuch zur Messung der Klimastabilität in 12,7 mm

(1/2″) breite Bänder aufgeschnitten. Die Prüfung wurde nach MIL-T-21029A unter nachstehenden Bedingungen durchgeführt:

Ein 90 cm langes Bandstück wurde durch ein angehängtes Gewicht unter einem Wickelzug von 9,81 N auf einen Wickeldorn mit einem Durchmesser von 12,7 mm gespult und das Bandende mit einem doppelseitig beschichteten schmalen Klebeband befestigt. Der auf diese Weise präparierte Wickel wurde einem Wärme-Feuchtigkeitszyklus ausgesetzt.

Zyklusablauf:

a) 10–18 Stunden bei 54,5°C und 85 ± 5% RF und 4 Std. bei 54,5°C und 5% RF, anschliessend bei Raumklima lagern.

b) (verschärfte Form) wie a) aber bei 76°C.

Das Band ist klimastabil, wenn sich nach Öffnen des Klebebandes die ersten Bandlagen selbständig lösen und abrollen. Bei nicht klimafesten Bändern wird ein Verkleben der Rückschicht mit der Magnetschicht beobachtet. Die Ergebnisse sind in der Tabelle angegeben.

Beispiel 2

Wie in Beispiel 1 beschrieben wurde, wird eine Rückgussdispersion hergestellt und verarbeitet, jedoch wurde anstelle des Polymerengemisches nach Beispiel 1 das Bindemittel gemäss US-A 3 293 066 eingesetzt. Die Verarbeitung erfolgte ebenfalls wie in Beispiel 1, die Ergebnisse sind in der Tabelle angegeben.

Beispiel 3

Wie in Beispiel 1 beschrieben, wurde eine Rückgussdispersion hergestellt und verarbeitet, jedoch wurde anstelle des Polymerengemisches nach Beispiel 1 das Bindemittel gemäss DE-A 2 500 546 eingesetzt. Die Verarbeitung erfolgte ebenfalls wie in Beispiel 1, die Ergebnisse sind in der Tabelle angegeben.

Tabelle

| | Versuch A Abrieb (mg) | Versuch B Haftfestigkeit (cN) | Versuch C Klimafestigkeit 54,5°C | 76°C |
|---|---|---|---|---|
| Beispiel 1 | 3,1 | 110+ | nicht verklebt, in Ordnung | nicht verklebt, in Ordnung |
| Beispiel 2 | 7,0 | 75+ | vollkommen verklebt | vollkommen verklebt |
| Beispiel 3 | 3,5 | 13 | nicht verklebt, in Ordnung | nicht verklebt, in Ordnung |

+ Klebeband gerissen

**Patentansprüche**

1. Flexibler Schichtmagnetogrammträger bestehend aus einer Polyethylenterephthalatfolie als Trägermaterial, einer auf der einen Seite des Trägermaterials aufgebrachten Magnetschicht aus in einem organischen Bindemittel dispergiertem anisotropem magnetischem Material und einer auf der zur Magnetschicht gegenüberliegenden Seite des Trägermaterials befindlichen leitfähigen Rückschicht, bestehend aus in einem Bindemittel feinverteilten nichtmagnetisierbaren leitfähigen und nichtleitfähigen Feststoffen, dadurch gekennzeichnet, dass das Bindemittel für die Rückschicht aus einem Gemisch aus

(a) 20 bis 45 Gew.teile eines linearen gesättigten Polyesterharzes,

(b) 10 bis 45 Gew.teile eines Polyurethanharzes,

(c) 15 bis 45 Gew.teile eines Polyphenoxyharzes und

(d) 5 bis 30 Gew.teile eines linearen Polyesterurethanharzes besteht.

2. Flexibler Schichtmagnetogrammträger gemäss Anspruch 1, dadurch gekennzeichnet, dass das Bindemittelgemisch aus den Komponenten (a) bis (d) mit einem Isocyanatharz vernetzt wird.

## Claims

1. A flexible magnetic recording medium which comprises a polyethylene terephthalate film as the base, a magnetic layer which is applied to one side of the base and consists of anisotropic magnetic material dispersed in an organic binder, and a conductive backing coating which is one the side of the base opposite to the magnetic layer and consists of non-magnetizable conductive and non-conductive solids finely dispersed in a binder, wherein the binder for the backing coating consists of a mixture of

(a) from 20 to 45 parts by weight of a linear saturated polyester resin,

(b) from 10 to 45 parts by weight of a polyurethane resin,

(c) from 15 to 45 parts by weight of a polyphenoxy resin, and

(d) from 5 to 30 parts by weight of a linear polyesterurethane resin.

2. A flexible magnetic recording medium as claimed in claim 1, wherein the binder mixture consisting of components (a) to (d) is crosslinked with an isocyanate resin.

## Revendications

1. Support flexible à couche d'enregistrement magnétique constitué d'un feuil de téréphtalate de polyéthylène, comme matériau de support, d'une couche magnétique appliquée sur l'une des faces du matériau support et constituée d'une matière magnétique anisotrope dispersée dans un liant organique et d'une couche arrière conductrice, située sur la face du matériau support opposée à celle de la couche magnétique et constituée de matières solides non magnétisables conductrices et non conductrices, finement réparties dans un liant, caractérisé par le fait que le liant pour la couche arrière est constitué par un mélange de:

(a) 20 à 45 parties en poids d'une résine polyester saturée, linéaire,

(b) 10 à 45 parties en poids d'une résine polyuréthane,

(c) 15 à 45 parties en poids d'une résine polyphénoxy et

(d) 5 à 30 parties en poids d'une résine polyesteruréthane linéaire.

2. Support flexible à couche d'enregistrement magnétique selon la revendication 1, caractérisé par le fait que le mélange de liant des composants (a) à (d) est réticulé avec une résine isocyanate.